# EUROPÄISCHE PATENTSCHRIFT

(11) **EP 2 611 657 B1**
(45) Veröffentlichungstag und Bekanntmachung des Hinweises auf die Patenterteilung: **24.10.2018**
(21) Anmeldenummer: 11740897.1
(22) Anmeldetag: 29.07.2011
(51) Int. Cl.: B60S 1/08

(54) **VERFAHREN ZUM REDUZIEREN DES MOTOR-DREHMOMENTS FÜR WISCHANTRIEBE**
METHOD FOR REDUCING THE MOTOR TORQUE FOR A WIPER DRIVE SYSTEM.
METHODE DE REDUCTION DU COUPLE POUR UN SYSTEME D'ENTRAINEMENT D'ESSUIE GLACE.

(30) Priorität: 02.09.2010 DE 102010040138
(43) Veröffentlichungstag der Anmeldung: 10.07.2013
(73) Patentinhaber: Robert Bosch GmbH, 70442 Stuttgart (DE)
(72) Erfinder: ZIMMER, Joachim, 410100 Changsha (DE); RAPP, Juergen, 77886 Lauf (DE); KOEHN, Swen, 76135 Karlsruhe (DE)
(86) Internationale Anmeldenummer: PCT/EP2011/063107
(87) Internationale Veröffentlichungsnummer: WO 2012/028405

(56) Entgegenhaltungen:
- WO-A1-02/087934
- DE-A1- 19 756 504
- DE-A1-102008 001 816

## Beschreibung

Die Erfindung betrifft ein Verfahren zum Betreiben eines Wischantriebs mit einem Motor, ein Computerprogrammprodukt mit Programmcode, der auf einem maschinenlesbaren Träger gespeichert ist, und ein Steuergerät für einen Wischantrieb. Insbesondere bezieht sich die Erfindung hierbei auf die Lastabhängigkeit des Motor-Drehmoments während des Wischens.

### Stand der Technik

Es sind zahlreiche Verfahren zur Steuerung von Wischantrieben (WSA) bekannt. Zum Beispiel beschreibt DE 101 44 985 einen Antrieb, der über eine Wischerwelle und ein von der Stellung des Getriebes abhängigem Drehmoment einen Wischer antreibt. Hierbei wird eine Steuerung derart verwendet, dass das von einem Motor abgegebene Drehmoment zu jedem Zeitpunkt unter Berücksichtigung des Übersetzungsverhältnisses bestimmt wird.

Bei Wischantrieben (WSA) werden die Bauteile im Betrieb durch Kräfte belastet. Dabei steigen bei Wischantrieben, wie sie beispielsweise in Kraftfahrzeugen für Scheibenwischer verwendet werden, diese Kräfte insbesondere im Falle von Schneelast, von Windlast oder im Falle des Blockierens des Wischers an. Vor allem im letzteren Fall des Blockierens, insbesondere bei steifen Anlagen, können sehr große Belastungen auftreten, die die Wischeranlage beschädigen oder zerstören. Dies kann bis zum Ausfall der Wischanlage durch Versagen von Bauteilen führen.

Typischerweise werden bei Wischanlagen mit Wischerdirektantrieben Antriebe mit reversierenden Elektromotoren verwendet, bei denen der Motor zur Generierung der Hin- und Herbewegung des Wischers die Drehrichtung wechseln. Das Wischerblatt wechselt hierbei die Bewegungsrichtung in einer unteren bzw. oberen Wendelage. Die Verwendung derartiger Reversiermotoren ermöglicht weiterhin eine erweiterte Parkstellung (EPS), das heißt eine Parkposition unterhalb der unteren Wendelage, so dass der Wischer im abgeschalteten Zustand in einer sehr tiefen Stellung, die während des normalen Betriebs der Wischanlage nicht erreicht wird, geparkt werden kann.

Als Schutzfunktion gegen Beschädigungen oder Zerstörungen kann einem in einem Wischantrieb enthaltener Elektromotor durch Pulsweitenmodulation (PWM) eine reduzierte Spannung und somit ein reduziertes Motor-Drehmoment zur Reduktion der Belastung zugeführt werden. Dabei kann typischerweise bei Verfahren der Wischermotor in kritischen Bereichen in seinem Drehmoment reduziert werden. Dies hat jedoch eine Grenze durch einen reduzierbaren Spannungswert für die Antriebseinheit, wobei die Spannung nicht beliebig reduziert werden kann. Bei einfachen Anlagen kann ferner die Geschwindigkeit des Antriebs und somit die Geschwindigkeit des Wischers im Bereich der Umkehrlagen reduziert werden. Die Kennlinie für die Pulsweitenmodulation für das Wischen wird im Normalbetrieb so ausgelegt, dass die Wischanlage auch bei hohen Windgeschwindigkeiten voll durchziehen kann und funktionstüchtig bleibt. Hierbei ist insbesondere auch die vom Gesetzgeber vorgeschriebene mindestens erforderliche Drehzahl der Wischanlage zu berücksichtigen, gemäß der in der niedrigsten Stufe der Wischanlage eine vorgegebene Drehzahl nicht unterschritten werden darf. Im Falle eines Blockierens der Wischanlage soll jedoch eine ausreichende Sensibilität gegeben sein, die die Anlage schützt. Die gesetzlichen Bestimmungen stehen dem Gedanken der Schutzfunktion bei dem Blockieren der Anlage jedoch entgegen, da bei entsprechender Reduktion des Motordrehmoments die erforderlichen Drehzahlen eventuell nicht mehr zur Verfügung gestellt werden können.

Dokument DE 10 2008 001 816 A offenbart ein Verfahren zum Betreiben eines Wischerantriebs gemäß dem Oberbegriff des Anspruchs 1.

### Offenbarung der Erfindung

Die Aufgabe der Erfindung besteht darin, die oben genannten Probleme zumindest teilweise zu lösen bzw. die Komponenten einer Wischerdirektantriebs leicht zu bauen und eine verbesserte Drehmomentsteuerung zur Verfügung zu stellen.

Gemäß einer Ausführungsform wird ein Verfahren zum Betreiben eines Wischantriebs mit einem Motor, insbesondere für einen Scheibenwischer zur Verfügung gestellt. Das Verfahren beinhaltet auslesen zumindest einer Kennlinie aus einem Speicher und betreiben des Wischerdirektantriebs mit einem winkelabhängigen und richtungsabhängigen Drehmoment, das maximal zu einem winkelabhängigen und richtungsabhängigen Wert der Kennlinie korrespondiert, wobei die Kennlinie zumindest die folgenden Werte beinhaltet: einen ersten, maximalen Wert des Aufwärtswischens bei einem ersten Wischwinkel zwischen einer unteren Wendelage und einer oberen Wendelage; einen zweiten Wert des Aufwärtswischens bei einem zweiten Wischwinkel zwischen dem ersten Wischwinkel und der oberen Wendelage, wobei der zweite Wert des Aufwärtswischens bei dem zweiten Wischwinkel kleiner ist als der erste, maximale Wert des Aufwärtswischens bei dem ersten Wischwinkel; einem ersten, maximalen Wert des Abwärtswischens, bei einem Wischwinkel zwischen der oberen Wendelage und der unteren Wendelage, wobei der erste, maximale Wert des Abwärtswischens größer ist als der erste, maximale Wert des Aufwärtswischens; und einen zweiten Wert des Abwärtswischen, der einer Wischerposition korrespondierend zum zweiten Wischwinkel entspricht, wobei der zweite Wert des Abwärtswischens größer ist als der zweite Wert des Aufwärtswischens.

Gemäß einer weiteren Ausführungsform wird ein Verfahren zum Berechnen mindestens einer Kennlinie für die Verwendung in einem Verfahren zum betreiben einer Wischanlage zur Verfügung gestellt. Das Verfahren enthält ein Erfassen eines Luftwiderstands von einem Wischblatt und einem Wischarm als winkelabhängige und richtungsabhängige erste Funktion; ein Erfassen der Massenträgheit des Motor, des Wischblatts und/oder des Wischarms als winkelabhängige und richtungsabhängige zweite Funktion; ein Erfassen von Reibungskräften des Wischblatts auf der Scheibe und Reibungskräften eines Lagers als winkelabhängige und richtungsabhängige dritte Funktion; und ein Berechnen der zumindest einen Kennlinie in Abhängigkeit der ersten, der zweiten und der dritten Funktion.

Gemäß einer weiteren Ausführungsform wird ein Computerprogrammprodukt mit Programmcode, der auf einem maschinenlesbaren Träger gespeichert ist, zur Verfügung gestellt. Das Computerprogrammprodukt ist zur Durchführung eines der hierin beschriebenen Verfahrensausführungsformen der Erfindung ausgestaltet, wenn das Programm auf einem Computer oder einem Steuergerät eines Fahrzeugs ausgeführt wird.

Gemäß einer noch weiteren Ausführungsform wird ein Steuergerät für einen Wischantrieb zur Verfügung gestellt, das zur Anwendung in einem Verfahren gemäß hierin beschriebenen Ausführungsformen programmiert ist.

Bevorzugte Ausführungsformen und besondere Aspekte der Erfindung ergeben sich aus den Unteransprüchen, in den Zeichnungen und der beiliegenden Beschreibung.

### Vorteile der Erfindung

Die hier beschriebenen Ausführungsformen gemäß der vorliegenden Erfindung können eine lastabhängige Momenten-Steuerung für einen Wischerdirektantrieb zur Verfügung stellen. Typischerweise können die Lastmomente eines Wischerdirektantriebs unter verschiedenen Betriebsbedingungen, d.h. auf der Scheibe eine Kraftfahrzeugs, festgestellt werden und eine winkelabhängige bzw. winkelabhängige und richtungsabhängige Steuerung und/oder Regelung kann im Bezug auf das Drehmoment definiert werden.

Ausführungsformen der Erfindung stellen hierzu eine Fallunterscheidung zwischen unterschiedlichen Lastfällen zur Verfügung. Im Allgemeinen werden eine oder mehrere Kennlinien in Abhängigkeit unterschiedlicher Wischwinkel und/oder Wischrichtungen betrachtet. Da bei Wischerdirektantrieben nicht zwangsläufig ein Motorkurbelwinkel zwischen 0° und 180° bzw. 0° und 360°verwendet wird kann einerseits auf ein transformierter Wischwinkel von 0° bis 180° oder 0° und bis 360° verwendet werden, der eine Wischrichtung bereits im Rahmen des Winkels berücksichtigt. Es ist jedoch auch möglich das Wischen für unterschiedliche Wischwinkel und Wischrichtungen zu betrachten, so dass ein Winkel zu einer Wischposition in einer Bewegungsrichtung korreliert und dieselbe Wischposition in der jeweiligen anderen Bewegungsrichtung wiederum eingenommen wird. Typischerweise kann diesbezüglich auch eine Fallunterscheidung in einen Bereich zwischen einer Parkposition und einer unteren Wendelage in Aufwärtswischrichtung , in einem Bereich zwischen unterer Wendelage und oberer Wendelage in Aufwärtswischrichtung, in eine Bereich nahe der oberen Wendelage (ein Bereich bis ca. 5° bis 20° von der oberen Wendelage entfernt), in einen Bereich der oberen Wendelage in Abwärtswischrichtung (ein Bereich bis ca. 5° bis 20° von der oberen Wendelage entfernt), in einen Bereich zwischen der oberen Wendelage und der unteren Wendelage in Abwärtswischrichtung, und in einem Bereich zwischen der unteren Wendelage und der Parkposition in Abwärtswischrichtung.

Gemäß einer Ausführungsform der Erfindung hat dabei eine Kennlinie zumindest die folgenden Werte: einen ersten, maximalen Wert des Aufwärtswischens bei einem ersten Wischwinkel zwischen einer unteren Wendelage und einer oberen Wendelage; einen zweiten Wert des Aufwärtswischens bei einem zweiten Wischwinkel zwischen dem ersten Wischwinkel und der oberen Wendelage, wobei der zweite Wert des Aufwärtswischens bei dem zweiten Wischwinkel kleiner ist als der erste, maximale Wert des Aufwärtswischens bei dem ersten Wischwinkel; einem ersten, maximalen Wert des Abwärtswischens, bei einem Wischwinkel zwischen der oberen Wendelage und der unteren Wendelage, wobei der erste, maximale Wert des Abwärtswischens größer ist als der erste, maximale Wert des Aufwärtswischens; und einen zweiten Wert des Abwärtswischen, der einer Wischerposition korrespondierend zum zweiten Wischwinkel entspricht, wobei der zweite Wert des Abwärtswischens größer ist als der zweite Wert des Aufwärtswischens.

Gemäß einer weiteren typischen Ausführungsform sind zumindest 90% der Werte der Kennlinie beim Aufwärtswischen bei weiteren Wischwinkeln zwischen dem ersten Wischwinkel und er oberen Wendelage kleiner sind als die entsprechenden Werte des Abwärtswischens bei Wischerpositionen korrespondierend zu den weiteren Wischwinkeln. Hierdurch kann einer beim Abwärtswischen erhöhten Windlast Rechnung getragen werden.

Gemäß einer weiteren typischen Ausführungsform sind zumindest 90% der Werte der Kennlinie bei weiteren Park-Wischwinkeln zwischen einer erweiterten Parkposition und der unteren Wendelage beim Aufwärtswischen größer sind als die entsprechenden Werte des Abwärtswischens bei Wischerpositionen korrespondierend zu den weiteren Park-Wischwinkeln. Hierdurch kann einer beim Abwärtswischen erhöhten Gefahr von Zerstörung oder Beschädigung durch Schneekeile o.ä. Rechnung getragen werden.

Gemäß weiteren typischen bevorzugten Ausführungsformen handelt es sich bei der Kennlinie um eine Drehmomentkennlinie in Abhängigkeit des Wischwinkels bzw. um eine Pulsweitenmodulationskennlinie in Abhängigkeit des Wischwinkels.

Gemäß weiteren typischen bevorzugten Ausführungsformen ist die zumindest eine Kennlinie eine Kennlinie aus einer Schar von Kennlinien ist. Dadurch kann eine lastabhängige Steuerung des Drehmoments für verschiedene Betriebszustände, verschiedene Betriebsbedingungen und/oder verschiedene Fahrzeugtypen zur Verfügung gestellt werden. Zum Beispiel kann die die Schar von Kennlinien eine Mehrzahl von Kennlinien für eine Mehrzahl von Witterungsbedingungen, eine Mehrzahl von Kennlinien für eine Mehrzahl von Fahrzeugtypen und/oder eine Mehrzahl von Kennlinien für eine Mehrzahl von Geschwindigkeitsbereichen sein.

Gemäß einer weiteren Ausführungsform kann ein Verfahren zum Berechnen mindestens einer Kennlinie folgende Schritte enthalten: erfassen eines Luftwiderstands von einem Wischblatt und einem Wischarm als winkelabhängige und richtungsabhängige erste Funktion; erfassen der Massenträgheit des Motor, des Wischblatts und/oder des Wischarms als winkelabhängige und richtungsabhängige zweite Funktion; erfassen von Reibungskräften des Wischblatts auf der Scheibe und Reibungskräften eines Lagers als winkelabhängige und richtungsabhängige dritte Funktion; und berechnen der zumindest einen Kennlinie in Abhängigkeit der ersten, der zweiten und der dritten Funktion.

Gemäß weiteren Ausführungsformen werden Computerprogrammprodukte mit Programmcode, der auf einem maschinenlesbaren Träger gespeichert ist, zur Durchführung der hier beschriebenen Verfahren gemäß Ausführungsformen der Erfindung zur Verfügung gestellt, wobei die Verfahren ausgeführt werden wenn das Programm auf einem Computer oder einem Steuergerät eines Fahrzeugs ausgeführt wird.

Ferner richten sich Ausführungsformen auf Scheibenwischvorrichtung mit einem Steuergerät gemäß oder einem Computerprogramprodukt Ausführungsformen der Erfindung und mit einem Wischerdirekt antrieb mit Motor, einem Wischarm und ein Wischblatt, wobei zumindest die Kennlinie und eine Sollbruchstelle des Wischarms aufeinander abgestimmt sind. Somit können Wischsysteme auf Leichtbauweise oder mit Sollbruchstellen und Kennlinien aufeinander abgestimmt werden. Durch Reduzierung der Belastungen können dünnere Wandstärken und Werkstoffe, wie z.B. Kunststoffe mit geringerer Festigkeit zum Einsatz kommen. Hierdurch können Bauraum und Kosten gespart werden. Ferner kann der Stoffeinsatz, das Gewicht der Wischvorrichtung bzw. der Antriebsvorrichtung und die Festigkeitsanforderungen von Komponenten und Bauteilen reduziert werden. Die winkelabhängige und richtungsabhängige Drehmomentsteuerung kann somit einer Leichtbauweise förderlich sein.

### Kurze Beschreibung der Zeichnungen

Ausführungsbeispiele der Erfindung sind in den Figuren dargestellt und werden im Folgenden näher beschrieben. Es zeigen:
Figur 1 eine schematische Darstellung eines Wischantriebs, eines Scheibenwischers, der Steuer- und Kontrollelemente sowie der für den Betrieb typischen Wischerpositionen;
Figur 2 eine schematische Darstellung von Kennlinien für einen Wischantrieb gemäß Ausführungsformen der vorliegenden Erfindung; und
Figur 3 ein Ablaufdiagramm eines Verfahrens zum Betrieb eines Wischantriebs gemäß Ausführungsformen der vorliegenden Erfindung.

### Ausführungsformen der Erfindung

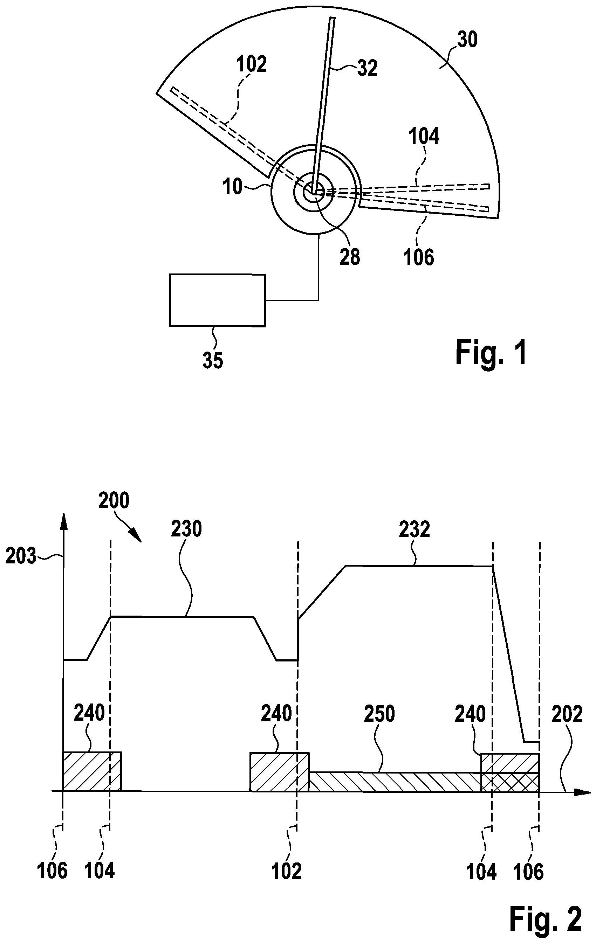

Figur 1 zeigt eine schematische Darstellung eines Aufbaus eines Wischantriebs. Ein Motor 10 führt am Lager 28 zu einer Drehbewegung des Wischhebels 32. Figur 1 zeigt den Wischhebel 32 in einer beliebigen Position auf der Scheibe 30. Durch die gestrichelten Linien wird die obere Wendelage 102, die untere Wendelage 104, und die erweiterte Parkstellung 106 dargestellt. Durch reversierende Rotation des Motors 10 wird im Normalbetrieb der Wischhebel 32 zwischen der oberen Wendelage 102 und der unteren Wendelage 104 hin- und herbewegt. Wird der Wischer während des Betriebs des Kraftfahrzeugs nicht benötigt oder nicht verwendet, das heißt wenn ein Benutzer den Wischantrieb ausschaltet, fährt der Wischhebel 32 von der unteren Wendelage 104 in die erweiterte Parkstellung 106. Typischerweise befindet sich die erweiterte Parkstellung 106 an einer sehr tiefen Position auf der Scheibe, z.B. ganz oder teilweise im Windschatten einer entsprechenden Hervorhebung einer Kühlerhaube eines Kraftfahrzeugs.

Gemäß typischen Ausführungsformen kann hierdurch ein sehr tiefes Parken des Wischhebels 32 in Relation zur Scheibe 30 realisiert werden. Beispielsweise kann die erweiterte Parkstellung einer Rotation von 2° bis 3° unterhalb der unteren Wendelage entsprechen.

Wie in Figur 1 dargestellt wird der Motor typischerweise durch ein Steuergerät 30 gesteuert und der Motor erkennt seine Lage, z.B. eine Rotation um die Achse 28, durch einen Sensor, wie zum Beispiel einen Magnetsensor.

Bei den Ausführungsformen der vorliegenden Erfindung wird eine lastabhängige Drehmomentsteuerung während des Wischens insbesondere für einen Wischerdirektantrieb zur Verfügung gestellt. Figur 2 illustriert eine Kennlinie in Abhängigkeit des Wischwinkels. Hierbei sind die Motorwellenpositionen analog zu Figur 1 eingezeichnet. Hierbei handelt es sich gemäß typischen, bevorzugten Ausführungsformen auch um Motorkurbelpositionen. Der Motorkurbelwinkel 102 entspricht der oberen Wendelage. Der Motorkurbelwinkels 104 entspricht der unteren Wendelage. Der Motorkurbelwinkel 106 entspricht der erweiterten Parkstellung. Eine Kennlinie 200 ist hier exemplarisch für eine Pulsweitenmodulation bzw. eine Spannung 203 dargestellt. Diese ergibt ein Drehmoment am Motor, das im Rahmen eines Direktantriebs ohne Übersetzung durch ein Gestänge an die Antriebswelle des Wischers übertragen wird. Das bedeutet, dass für jede Wischwinkelstellung ungefähr das gleiche Drehmoment, das vom Motor zur Verfügung gestellt wird, am Wischhebel anliegt. Alternativ kann jedoch auch eine für jeden Wischwinkel feste Übersetzung des Drehmoments eingeführt werden.

Figur 2 zeigt ferner Bereiche 240 und 250. Bereich 240 entspricht Wischwinkelbereichen, in denen bei entsprechender Witterung eine Schneekeilbildung auftreten kann. Schneekeile können zum Blockieren der Wischvorrichtung und somit zu hohen Kräften führen. Der Bereich 250 kennzeichnet den Bereich des Abwärtswischens, der durch erhöhe Kräfte durch den Luftwiderstands des Wischarms und Wischblattes gekennzeichnet ist.

Bei den Ausführungsformen der vorliegenden Erfindung wird eine lastabhängige Momenten-Steuerung zur Verfügung gestellt. Das Drehmoment wird in Abhängigkeit des Wischwinkels bzw. Abhängigkeit des Wischwinkels und der Wischrichtung gesteuert. Hierbei kann eine individuelle Steuerung für jeden Wischwinkel bzw. jede Position des Wischers und jede Richtung des Wischens in Abhängigkeit der Betriebsbedingungen zur Verfügung gestellt werden. Die Lastmomente werden unter verschiedenen Betriebsbedingungen festgestellt. Dies kann zum Beispiel auf der Scheibe eines Kraftfahrzeugs, insbesondere auf der Scheibe eines spezifischen Kraftfahrzeugs geschehen. Hierdurch wird eine winkelabhängige bzw. eine winkelabhängige und richtungsabhängige Steuerung oder Regelung im Bezug auf das Drehmoment vordefiniert. Lastmomente hängen dabei insbesondere vom Luftwiderstand der Wischblätter und Wischarme, insbesondere bei hohen Fahrzeuggeschwindigkeiten (cw-Wert); von der Massenträgheit der beschleunigten Massen, insbesondere rotierende und reversierende Massen im Motor und zu beschleunigende Massen des Wischhebels; und/oder von Reibwerten, insbesondere von dem Wischblatt auf der Scheibe und von Lager-Bauteilen im Antrieb ab. Gemäß weiteren Modifikation können diese Einflüsse weiterhin in Abhängigkeit des Fahrzeugtyps, in Abhängigkeit von Betriebsbedingungen wie Fahrzeuggeschwindigkeit und Witterung und/oder in Abhängigkeit von der Positionierung des Wischhebels erfasst werden. Zum Beispiel kann hierbei der erhöhte Luftwiderstand bei erhöhten Geschwindigkeit berücksichtigt werden. Als weiteres Beispiel kann eine Kennlinie für einen rechten und linken Wischer einer Frontscheibe zu unterschiedlichen Lastmomenten führen, was bei im Rahmen einer Verwendung von unterschiedlichen Kennlinien ermittel werden kann.

Gemäß typischen Ausführungsformen kann daher eine Berechnung einer Kennlinie oder einer Schar von Kennlinien erfolgen. Dabei kann ein Luftwiderstands von einem Wischblatt und einem Wischarm als winkelabhängige und richtungsabhängige erste Funktion, die Massenträgheit des Motor, des Wischblatts und/oder des Wischarms als winkelabhängige und richtungsabhängige zweite Funktion und/oder die Reibungskräften des Wischblatts auf der Scheibe und Reibungskräften eines Lagers als winkelabhängige und richtungsabhängige dritte Funktion erfasst werden. Diese Funktionen dienen dann zur Berechnung der zumindest einen Kennlinie in Abhängigkeit der ersten, der zweiten und der dritten Funktion.

Figur 2 zeigt eine Kennlinie 200 mit unterschiedlichen Bereichen, wobei das Drehmoment bereichsweise oder für jeden Winkel (und Richtung) separat definiert wird. Die Bereich 230 und 232 unterscheiden hierbei zum Beispiel das Aufwärtswischen 230 und das Abwärtswischen 232. Das Abwärtswischen benötigt durch den erhöhten Luftwiderstand ein erhöhtes Moment. In den Bereichen, die zur Schneekeilbildung 240 korrespondieren, wird das Drehmoment reduziert, um einer Beschädigung oder Zerstörung der Wischvorrichtung vorzubeugen. Wie aus der Figur 2 zu erkennen ist, ist die lastabhängige Kennlinie im Bereich der oberen Wendelage 102 beim Abwärtswischen jedoch ebenfalls mit einem erhöhten Drehmoment definiert. Lediglich im Bereich zwischen der unteren Wendelage und der Parkposition ist das Drehmoment beim Abwärtswischen im Vergleich zu korrespondierenden Wischpositionen beim Aufwärtswischen reduziert.

Ein Wischerdirektantrieb ist im Vergleich zu einer Wischvorrichtung mit Gestänge ein steiferes System. Jedoch zeigt sich auch hier ein elastisches verhalten des Gesamtsystems mit Schwachstellen im Bezug auf Blockierfestigkeit und Betriebsfestigkeit. Darüber hinaus können Gussplatinen, die z.B. auf Leichtbauweise optimiert sind, oder mit Sollbruchstellen für einen geforderten Fußgängeraufprallschutz versehen sind, und Motorhaltebleche, an denen der Wischermotor befestigt wird, je nach Belastung ein unterschiedliches Verhalten zeigen. Zum Beispiel können die Belastungen an den Bauteilen bei einer Blockierung je nach Wischrichtung und je nach Wischwinkel stark unterschiedlich ausfallen.

Gemäß Ausführungsformen der Erfindung mit einer Lastabhängigen Drehmomentsteuerung, könne die Komponenten leichter gebaut werden, d.h. zum Beispiel mit dünneren Wandstärken oder leichteren Materialien gebaut werden. Dies kann zu einer weiteren Reduzierung des Stoffeinsatzes und einer Reduzierung des Gesichts der Antriebsvorrichtung führen. Wischanlagen können durch die winkelabhängige und richtungsabhängige Steuerung, die z.B. mindestens einen Spannungswert oder PWM-Wert für jede 5° Wischwinkel oder mindestens einen Spannungswert oder PWM-Wert für jede 1° Wischwinkel, jeweils in beide Wischrichtungen vorgibt, und die Herstellung eine Korrelation der Drehmomentsteuerung und den Schwachstellen oder Sollbruchstellen des Wischantriebs, der Wischhebel und/oder der Wischblätter leichter, kostensparender, bzw. mit weniger Bauraum bei gutem Schutz für das Gesamtsystem zur Verfügung gestellt werden. Es kann also durch eine winkel- und richtungsabhängige Kennlinie, die zu einem maximalen Drehmoment korrespondiert, das Drehmoment derart gesteuert werden, dass zu jedem Zeitpunkt nur das erforderliche Drehmoment abgeben wird, und dass im Falle eines Blockierens der Wischwinkel und die Wischrichtung für jede Stellung, d.h. kontinuierlich oder quasi-kontinuierlich in kleinen Bereichen (kleiner 10°, bevorzugt kleiner 5° oder kleiner 1°) für die Belastung berücksichtigt wird.

Gemäß typischen Ausführungsformen kann eine solche Steuerung in eine Software und/oder eine Steuervorrichtung integriert werden.

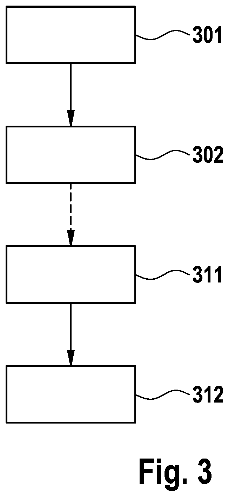

Ein entsprechendes Verfahren gemäß Ausführungsform der vorliegenden Erfindung ist in Figur 3 durch ein Ablaufdiagramm dargestellt. In Schritt 301 wird zumindest eine Last erfasst. Typischerweise können Lasten wie Luftwiderstand, Reibung und Massenträgheit getrennt voneinander, oder alternativ, als Gesamtlast erfasst werden. Hierbei wird unter dem begriff "erfassen" sowohl ein Messen von Lastfällen als auch eine Berechnung von Lasten, z.B. durch Modellrechnungen verstanden. In Schritt 302 werden aus der einen oder den mehreren erfassten Lastfunktionen eine eine Kennlinie oder eine Schar von Kennlinie berechnet. Die Kennlinie kann in einem Speicher eines Kraftfahrzeugs abgelegt werden. In Schritt 311, der als Beginn eines von den Schritten 301 und 302 unabhängigen Verfahrens abgesehen werden, kann, was durch den gestrichelten Pfeil angedeutet ist, wird zumindest eine Kennlinie aus einem Speicher gelesen. Die zumindest eine Kennlinie wird in Schritt 312 zum Betreiben des Wischerantriebs verwendet. Hierbei wird für günstige Betriebsbedingungen in der Regel ein Drehmoment unterhalb der z.B. in Figur 2 als Kennlinie 200 dargestellten Kurve verwendet. Für größere Lastfälle wie z.B. ein Blockieren kann der Wert für den entsprechenden Wischwinkel bzw. für die entsprechende Wischerposition und die entsprechende Wischrichtung bis zu maximal den durch die Kennlinie angegebenen Werten ansteigen.

## Patentansprüche

1. Verfahren zum Betreiben eines Wischdirektantriebs mit einem Motor (10) für einen Scheibenwischer, **gekennzeichnet durch** die folgende Schritten:
auslesen zumindest einer Kennlinie aus einem Speicher und betreiben des Wischerdirektantriebs mit einem winkelabhängigen und richtungsabhängigen Drehmoment, das maximal zu einem winkelabhängigen und richtungsabhängigen Wert der Kennlinie korrespondiert,
wobei die Kennlinie zumindest die folgenden Werte umfasst:
einen ersten, maximalen Wert des Aufwärtswischens bei einem ersten Wischwinkel zwischen einer unteren Wendelage und einer oberen Wendelage;
einen zweiten Wert des Aufwärtswischens bei einem zweiten Wischwinkel zwischen dem ersten Wischwinkel und der oberen Wendelage, wobei der zweite Wert des Aufwärtswischens bei dem zweiten Wischwinkel kleiner ist als der erste, maximale Wert des Aufwärtswischens bei dem ersten Wischwinkel;
einem ersten, maximalen Wert des Abwärtswischens, bei einem Wischwinkel zwischen der oberen Wendelage und der unteren Wendelage, wobei der erste, maximale Wert des Abwärtswischens größer ist als der erste, maximale Wert des Aufwärtswischens; und
einen zweiten Wert des Abwärtswischen, der einer Wischerposition korrespondierend zum zweiten Wischwinkel entspricht, wobei der zweite Wert des Abwärtswischens größer ist als der zweite Wert des Aufwärtswischens.

2. Verfahren gemäß Anspruch 1, wobei zumindest 90% der Werte der Kennlinie beim Aufwärtswischen bei weiteren Wischwinkeln zwischen dem ersten Wischwinkel und er oberen Wendelage kleiner sind als die entsprechenden Werte des Abwärtswischens bei Wischerpositionen korrespondierend zu den weiteren Wischwinkeln.

3. Verfahren gemäß einem der Ansprüche 1 bis 2, wobei zumindest 90% der Werte der Kennlinie bei weiteren Park-Wischwinkeln zwischen einer erweiterten Parkposition und der unteren Wendelage beim Aufwärtswischen größer sind als die entsprechenden Werte des Abwärtswischens bei Wischerpositionen korrespondierend zu den weiteren Park-Wischwinkeln.

4. Verfahren gemäß einem der Ansprüche 1 bis 3, wobei die Kennlinie mit einer Pulsweitenmodulation in Abhängigkeit des Wischwinkels korreliert.

5. Verfahren gemäß einem der Ansprüche 1 bis 4, wobei die zumindest eine Kennlinie eine Kennlinie aus einer Schar von Kennlinien ist.

6. Verfahren gemäß Anspruch 5, wobei die Schar von Kennlinien eine Mehrzahl von Kennlinien für eine Mehrzahl von Witterungsbedingungen, eine Mehrzahl von Kennlinien für eine Mehrzahl von Fahrzeugtypen und/oder eine Mehrzahl von Kennlinien für eine Mehrzahl von Geschwindigkeitsbereichen ist.

7. Verfahren zum Berechnen mindestens einer Kennlinie für die Verwendung in einem Verfahren gemäß Ansprüchen 1 bis 6, umfassend:
erfassen eines Luftwiderstands von einem Wischblatt und einem Wischarm als winkelabhängige und richtungsabhängige erste Funktion;
erfassen der Massenträgheit des Motor, des Wischblatts und/oder des Wischarms als winkelabhängige und richtungsabhängige zweite Funktion;
erfassen von Reibungskräften des Wischblatts auf der Scheibe und Reibungskräften eines Lagers als winkelabhängige und richtungsabhängige dritte Funktion;
berechnen der zumindest einen Kennlinie in Abhängigkeit der ersten, der zweiten und der dritten Funktion.

8. Computerprogrammprodukt mit Programmcode, der auf einem maschinenlesbaren Träger gespeichert ist, zur Durchführung des Verfahrens nach einem der Ansprüche 1 bis 7, wenn das Programm auf einem Computer oder einem Steuergerät eines Fahrzeugs ausgeführt wird.

9. Steuergerät (20) für einen Wischdirektantrieb, das zur Anwendung in einem Verfahren nach einem der Ansprüche 1 bis 8 programmiert ist.

10. Scheibenwischvorrichtung, umfassend:
ein Steuergerät gemäß Anspruch 9 oder ein Computerprogramprodukt gemäß Anspruch 8; und
ein Wischerdirektantrieb mit dem Motor, einem Wischarm und ein Wischblatt, wobei die zumindest eine Kennlinie und eine Sollbruchstelle des Wischarms aufeinander abgestimmt sind.

## Claims

1. Method for operating a direct wiper drive comprising a motor (10) for a windscreen wiper, **characterized by** the following steps:
reading out at least one characteristic curve from a memory and operating the direct wiper drive with an angle-dependent and direction-dependent torque which corresponds at most to an angle-dependent and direction-dependent value of the characteristic curve,
wherein the characteristic curve comprises at least the following values:
a first, maximum value for upward wiping at a first wiping angle between a lower reversal point and an upper reversal point;
a second value for upward wiping at a second wiping angle between the first wiping angle and the upper reversal point, wherein the second value for upward wiping at the second wiping angle is smaller than the first, maximum value for upward wiping at the first wiping angle;
a first, maximum value for downward wiping at a wiping angle between the upper reversal point and the lower reversal point, wherein the first, maximum value for downward wiping is greater than the first, maximum value for upward wiping; and
a second value for downward wiping which corresponds to a wiper position corresponding to the second wiping angle, wherein the second value for downward wiping is greater than the second value for upward wiping.

2. Method according to Claim 1, wherein at least 90% of the values of the characteristic curve during upward wiping at further wiping angles between the first wiping angle and the upper reversal point are smaller than the corresponding values for downward wiping at wiper positions corresponding to the further wiping angles.

3. Method according to either of Claims 1 and 2, wherein at least 90% of the values of the characteristic curve at further park wiping angles between an extended park position and the lower reversal point during upward wiping are greater than the corresponding values for downward wiping at wiper positions corresponding to the further park wiping angles.

4. Method according to one of Claims 1 to 3, wherein the characteristic curve is correlated with a pulse width modulation depending on the wiping angle.

5. Method according to one of Claims 1 to 4, wherein the at least one characteristic curve is a characteristic curve from a family of characteristic curves.

6. Method according to Claim 5, wherein the family of characteristic curves is a plurality of characteristic curves for a plurality of weather conditions, a plurality of characteristic curves for a plurality of vehicle types and/or a plurality of characteristic curves for a plurality of speed ranges.

7. Method for calculating at least one characteristic curve for use in a method according to Claims 1 to 6, comprising:
detecting an air resistance of a wiper blade and a wiper arm as an angle-dependent and direction-dependent first function;
detecting the mass inertia of the motor, the wiper blade and/or the wiper arm as an angle-dependent and direction-dependent second function;
detecting frictional forces of the wiper blade on the windscreen and frictional forces of a bearing as an angle-dependent and direction-dependent third function;
and calculating the at least one characteristic curve depending on the first, the second and the third function.

8. Computer program product with a program code, which is stored on a machine-readable carrier, for carrying out the method according to one of Claims 1 to 7 when the program is executed on a computer or a control device of a vehicle.

9. Control device (20) for a direct wiper drive which is programmed for use in a method according to one of Claims 1 to 8.

10. Windscreen wiper apparatus, comprising:
a control device according to Claim 9 or a computer program product according to Claim 8; and
a direct wiper drive comprising the motor, a wiper arm and a wiper blade, wherein the at least one characteristic curve and a predetermined breaking point of the wiper arm are matched to one another.

## Revendications

1. Procédé pour faire fonctionner un entraînement direct de balai avec un moteur (10) pour un essuie-glace, **caractérisé par** les étapes suivantes:
lire au moins une courbe caractéristique dans une mémoire et faire fonctionner l'entraînement direct de balai avec un couple dépendant de l'angle et de la direction, qui correspond au maximum à une valeur de la courbe caractéristique dépendant de l'angle et dépendant de la direction,
dans lequel la courbe caractéristique comprend au moins les valeurs suivantes:
une première valeur maximale du balayage montant pour un premier angle de balayage entre une position d'inversion inférieure et une position d'inversion supérieure,
une deuxième valeur du balayage montant pour un deuxième angle de balayage entre le premier angle de balayage et la position d'inversion supérieure, dans lequel la deuxième valeur du balayage montant pour le deuxième angle de balayage est plus petite que la première valeur maximale du balayage montant pour le premier angle de balayage;
une première valeur maximale du balayage descendant, pour un angle de balayage entre la position d'inversion supérieure et la position d'inversion inférieure, dans lequel la première valeur maximale du balayage descendant est plus grande que la première valeur maximale du balayage montant; et
une deuxième valeur du balayage descendant, qui correspond à une position de balai correspondant au deuxième angle de balayage, dans lequel la deuxième valeur du balayage descendant est plus grande que la deuxième valeur du balayage montant.

2. Procédé selon la revendication 1, dans lequel au moins 90 % des valeurs de la courbe caractéristique lors du balayage montant pour d'autres angles de balayage entre le premier angle de balayage et la position d'inversion supérieure sont plus petites que les valeurs correspondantes du balayage descendant pour des positions de balai correspondant aux autres angles de balayage.

3. Procédé selon une des revendications 1 à 2, dans lequel au moins 90 % des valeurs de la courbe caractéristique pour d'autres angles de balayage-parcage entre une position de parcage élargie et la position d'inversion inférieure lors du balayage montant sont plus grandes que les valeurs correspondantes du balayage descendant pour des positions de balai correspondant aux autres angles de balayage-parcage.

4. Procédé selon l'une quelconque des revendications 1 à 3, dans lequel la courbe caractéristique se corrèle avec une modulation de largeur d'impulsion en fonction de l'angle de balayage.

5. Procédé selon l'une quelconque des revendications 1 à 4, dans lequel ladite au moins une courbe caractéristique est une courbe caractéristique d'un faisceau de courbes caractéristiques.

6. Procédé selon la revendication 5, dans lequel le faisceau de courbes caractéristiques est une multiplicité de courbes caractéristiques pour une multiplicité de conditions atmosphériques, une multiplicité de courbes caractéristiques pour une multiplicité de types de véhicule et/ou une multiplicité de courbes caractéristiques pour une multiplicité de plages de vitesse.

7. Procédé pour calculer au moins une courbe caractéristique à utiliser dans un procédé selon l'une quelconque des revendications 1 à 6, comprenant les étapes suivantes:
détecter une résistance aérodynamique d'une lame d'essuie-glace et d'un bras d'essuie-glace comme première fonction dépendant de l'angle et dépendant de la direction;
détecter une inertie massique du moteur, de la lame d'essuie-glace et/ou du bras d'essuie-glace comme deuxième fonction dépendant de l'angle et dépendant de la direction;
détecter des forces de frottement de la lame d'essuie-glace sur la vitre et des forces de frottement d'un palier comme troisième fonction dépendant de l'angle et dépendant de la direction;
calculer au moins une courbe caractéristique en fonction de la première, de la deuxième et de la troisième fonction.

8. Produit de programme informatique avec code de programme, qui est mémorisé sur un support lisible à la machine, pour l'exécution du procédé selon l'une quelconque des revendications 1 à 7, lorsque le programme est exécuté sur un ordinateur ou un appareil de commande d'un véhicule.

9. Appareil de commande (20) pour un entraînement direct de balai, qui est programmé pour être utilisé dans un procédé selon l'une quelconque des revendications 1 à 8.

10. Dispositif d'essuie-glace, comprenant:
un appareil de commande selon la revendication 9 ou un produit de programme informatique selon la revendication 8; et
un entraînement direct de balai avec le moteur, un bras d'essuie-glace et une lame d'essuie-glace, dans lequel ladite au moins une courbe caractéristique et un point de rupture du bras d'essuie-glace sont accordés l'un à l'autre.
